# EUROPEAN PATENT SPECIFICATION

(11) **EP 4 069 131 B1**
(45) Date of publication and mention of the grant of the patent: **20.12.2023**
(21) Application number: 20829118.7
(22) Date of filing: 03.12.2020
(51) Int. Cl.: A61C 5/50

(54) **MULTIPLE VISCOSITY GUTTA-PERCHA COATED ENDODONTIC INSTRUMENTS**
MIT GUTTAPERCHA BESCHICHTETE ENDODONTISCHE INSTRUMENTE MIT UNTERSCHIEDLICHER VISKOSITÄT
INSTRUMENTS ENDODONTIQUES REVÊTUS DE GUTTA-PERCHA À VISCOSITÉ MULTIPLE

(30) Priority: 03.12.2019 US 201962942981 P; 03.12.2019 US 201962943002 P
(43) Date of publication of application: 12.10.2022
(60) Divisional application: 22208958.3
(73) Proprietor: Dentsply Sirona Inc., York, PA 17401 (US)
(72) Inventor: BARATZ, Adam, Broken Arrow, Oklahoma 74012 (US); WILKINSON, Kevin, Bixby, Oklahoma 74008 (US); SUBRAMANIAN, Prakash, Broken Arrow, Oklahoma 74012 (US)
(74) Representative: Pichova, Vanda
(86) International application number: PCT/US2020/063029
(87) International publication number: WO 2021/113455

(56) References cited:
- WO-A1-2018/075652
- US-A- 5 089 183
- US-B1- 7 665 991

## Description

### FIELD OF THE DISCLOSURE

The present disclosure provides an obturator for filling an endodontically prepared root canals. The obturator comprises an elongated carrier having a distal end, a proximal end, and a working portion with a combination of filler materials having multiple viscosities coated on the working portion.

### BACKGROUND OF THE DISCLOSURE

One of the major problems about the current obturators for filling an endodontically prepared root canal is that the gutta-percha ends up in the pulp chamber in large amount. Also, if the gutta-percha is getting scraped off or stuck in the pulp chamber, then it is not filling in the canal space/anatomy.

Obturators having different configuration are known. U.S. Pat. No. 5,833,457 discloses an obturator for use in filling an endodontically prepared root canal in a tooth comprising an elongated body having a handle portion and a shaft. The shaft tapering from the handle to the shaft distal end, the shaft having an exterior surface with a generally linear groove therein extending from near the handle to the shaft distal end, or at least adjacent to the shaft distal end. The groove provides: (a) a channel for flow of excess filler material as the shaft is positioned into a prepared root canal; (b) increased flexibility of the shaft; and (c) a passageway that will accept a slender, tapered metallic retrieval tool, such as a typical endodontic file, to assist in the removal of the shaft from a root canal.

U.S Pat. Appl. No. 2017/0071698 describes an endodontic obturator for obturating a root canal having a wire made of a conductive material, a carrier, and a sheath. The carrier is configured to releasably couple to the wire. The sheath is configured to slidably receive the carrier and is made of a second thermoset material. The carrier is formed of gutta- percha having a high melting temperature. The sheath is formed of a gutta- percha having a melting temperature that is lower than the melting temperature of the gutta- percha that forms the carrier. The sheath also includes heat conductive particles that improves the thermal mechanical properties of gutta-percha, for example, by increasing the heat conductivity of the gutta percha. The sheath may have a melting temperature of about 80°C to about 90°C, and carrier may have a melting temperature of about 180°C to about 220°C. A method of making an endodontic obturator is also disclosed. The method includes molding a carrier made of a first thermoset material around a conductive wire, molding a sheath made of a second thermoset material, and coupling the carrier and the sheath.

U.S Pat. Appl. No. 2019/0117336 describes a root canal fill device comprising a flexible core member coupled to a rigid post member and a method for manufacturing the root canal fill device. The method includes forming a flexible core member; heating an end portion of the flexible core member to form a softened transition portion; and inserting a rigid post member into the softened transition portion. The flexible core member comprises gutta-percha and the rigid post member comprises a fibrous material such as gutta-percha, or the like.

U.S Pat. Appl. No. 2008/0108015 discloses manufacture of dental posts and obturators having a filling material applied to the apical end of the post and obturator such that the adherence strength between the filling material and the post or obturator is very high. The post or obturator, which includes a main body and a carrier, is manufactured by one of the matched die processes, autoclave molding, resin injection molding (RIM), sheet, dough and bulk molding, press molding, injection molding, reaction injection molding, resin transfer molding (RTM), compression molding, open molding, hand rolling, dipping and rolling, pressing, extrusion, pultrusion and filament winding. After the carrier of the obturator has been manufactured, it is coated with filling material. The filling material may be applied by any known means such as dipping, injection molding, hand rolling, spraying, and the like. The filling material is adhered to the post and obturator by applying one or more corona or plasma treatments to the surface of the post and obturator and thereafter applying the filling material to the surface-treated post and obturator.

U.S. Pat. No. 7,252,508 discloses an endodontic obturator comprising a shaft section and a filler section fabricated of the same material and formed as a single unit. A handle section may be included and may be formed integrally with the shaft section and filler section as a single unit or may be fabricated separately and attached to the single unit containing the shaft section and the filler section. Also, provided is an endodontic post having a post section and a filler section fabricated of the same matrix material to provide a cohesive bond between the two sections. The material is typically a thermoplastic, synthetic rubber, chemo-plastic (i.e., may be softened by chemicals), resinous or similar polymeric material.

U.S Pat. Appl. No. 2008/0274439 provides kit-of-parts containing (i) a dental device for use in the obturation of a root canal which comprises a tapered obturating point portion integrally connected at the distal end of a functional portion, whereby the functional portion comprises (a) a neck portion adjacent to the obturating point portion, and (b) a handle portion, and (ii) a dental sealant composition, wherein the dental device is made of a material obtainable by curing a composition containing one or more curable components contained in the dental sealant. The formation of the dental device may be carried out by compression molding wherein a heated mold is squeezed around a pre-formed blank. More preferably, the formation of the dental device may be carried out by injection molding wherein a power or pellet is liquified, injected into a mold, cooled under pressure, and ejected. The injection unit is operated so that the material is heated for injection molding at the injection nozzle to a temperature which is 110° to 150°C, above the glass transition temperature of the material.

U.S Pat. Appl. No. 2007/0131139 discloses an endodontic post comprising: a post section; and a tip section, wherein the tip section comprises a filling material, wherein the filling material comprises a thermoplastic polymer having a bond strength when bonded to a root canal sealant equal to or greater than about 3 MPa; and optionally, a bioactive filler. The thermoplastic polymer acts as a matrix for the bioactive substance.

A majority of endodontic obturators are made of a shaft having a distal end covered with a filler material such as gutta percha. For example, U.S. Pat. No. 5,595,486 describes a device and method for filling an endodontically prepared tooth. The device consists of a carrier. Integrally attached to the carrier is a dental post. A filler material surrounds the carrier and part of the post. The filler material is gutta-percha. U.S Pat. Appl. No. 2008/0108009 discloses an obturator comprising: an elongated shaft; a flowable filler material disposed on the elongated shaft; the elongated shaft is made from a polymer plastic having bismuth particles dispersed there through. The flowable filler material comprises gutta-percha.

U.S. Pat. No. 7,665,991 describes an endodontic obturator for filling an endodontically prepared root canal of a tooth. The endodontic obturator includes an elongated shaft having a proximate portion and a distal portion. The proximate portion has a handle portion connected thereto or is suitable for being releasably connected to a handle portion. A layer of filler material is coated about the shaft. The filler material has a low operating temperature at which it becomes plasticized or partially molten. The filler material in the layer disposed close to the proximate end can have a higher viscosity at the operating temperature than the filler material closer to the distal end. The filler material has a composition comprising gutta-percha and/or polycaprolactone. When the obturator with the pre-heated ( to a temperature at which substantially all of the filler material is melted or plasticized ) layer of filler material is inserted in the root canal and exercised by means of the handle then the first portion of the filler material has a plunger effect on the second portion of the filler material, thereby causing the pressure at the apex end of the tooth to increase so that a more complete (three-dimensional) filling of the root canal with fissures and widening is obtained.

U.S Pat. Appl. No. 2010/0167232 discloses an obturator for use in filling an endodontically prepared root canal comprising: a shaft having a proximal end and a distal end; and filling material disposed on the shaft; wherein the shaft is made of a material comprising a thermoplastic matrix material, a filler, and a process aid; wherein the thermoplastic matrix material has a molding temperature equal to or greater than about 300°C and a melting temperature in the range from about 150°C to about 200°C; and wherein the shaft is dissolvable with a dental solvent. The filling material is gutta-percha. Also, disclosed is a method of making the endodontic obturator comprising: mixing a thermoplastic matrix material, a filler, and a process aid together to form a mixture, wherein the thermoplastic matrix material has a molding temperature greater than about 300°C and a melting temperature in the range of from about 150°C to about 200°C; heating the mixture to a temperature in the range of about 285°C to about 305°C; injection molding the heated mixture at a temperature in the range of about 335°C to about 390°C to form a shaft, whereby the shaft has a distal end and a proximal end; and applying a filling material onto the shaft.

U.S. Pat. No. 5,089,183 describes a method of manufacturing appliances for use in filling endodontically prepared root canals. The method includes the steps of forming a mold having a plurality of spaced apart elongated cavities therein, filling each of the cavities with uncured endodontic filler material, inserting into each cavity the shaft portion of a filler carrier, each filler carrier having a handle portion that remains exterior of the mold, placing the mold with the uncured filler material and filler carrier therein in an oven, heating the mold with the uncured filler material and filler carriers therein to cause the filler material to cure and adhere to the filler carrier shaft portions, and removing the filler carriers having the filler material cured thereon, each of which is ready for use as an appliance to fill an endodontically prepared root canal.

Several methods (not claimed) are known for obturating an extirpated root canal. For example, U.S. Pat. No. 5,083,923 discloses a method of obturating an extirpated root canal that utilizes two types of filler material, one type of which is in the form of a gutta-percha point and the other type of which is a thermoplasticized gutta-percha having a melting temperature of about 15° to 20°C less than the melting temperature of the gutta-percha point. The steps of the method include introducing an initial amount of thermoplasticized gutta-percha in a heated and softened condition into the root canal so that the initial amount fills the bottom of the canal. A gutta-percha point is then positioned within the root canal and another amount of thermoplasticized gutta-percha is introduced in a heated and softened condition into the canal. The thermoplasticized gutta-percha is then manipulated into contact with the portion of the gutta-percha point positioned within the root canal so that the gutta-percha point is fed into and compacted within the root canal with the thermoplasticized gutta-percha. Additional amounts of thermoplasticized gutta-percha are introduced and manipulated into contact with additional gutta-percha points as necessary to fill the root canal with a core of filler material. One of the drawback of this method is that other process has to be repeated several times in order to fill the complete canal.

WO 93/14714 discloses a method of obturating an extirpated root canal and an associated filler material that utilizes two classes of gutta-percha, one class of which becomes plasticized at a predetermined temperature and the other class of which becomes plasticized at a temperature which is less than the predetermined temperature. In one embodiment of the method, the second class of gutta-percha is coated about the first class when in a plasticized condition, and in another embodiment of the method, the second class is pre-coated about the first class and the second class is heated to plasticize condition without plasticizing the first class. In either case, the first class of gutta-percha supports the plasticized second class when subsequently introduced into a root canal for filling the canal. To increase the rigidity of the first class of gutta-percha, the first class may be coated with a cured layer of methyl methacrylate before the second class of gutta-percha is coated about the first class. To use either of the filler material assemblies, the assembly is heated so that the outer coating of the second class of gutta -percha becomes plasticized but the first coating of the first class gutta-percha remains unplasticized. This could lead to outflow of the second class gutta percha into the pulpal area during insertion into the canal. Following introduction of the two classes of gutta-percha into the canal, the classes may be condensed within the root canal system.

U.S. Pat. No. 5,302,129 describes an endodontic procedure which involves extirpating a root canal of a tooth, and then inserting a machine-driven compactor which is coated with alpha phase gutta-percha into the extirpated canal. The compactor is then rotated at a relatively high speed and so that the alpha phase gutta-percha is plasticized solely by the frictional heat generated by the rotating compactor. The plasticized gutta-percha is thrown radially outwardly, and pushed downwardly, so as to fill all of the voids of the canal, and the compactor is then withdrawn and the gutta-percha cools and solidifies. A crown may be then fitted to the tooth above the gutta-percha in the conventional manner.

U.S. Pat. No. 6,312,261 describes a method of filing an endodontically prepared root canal that includes the steps of applying filler material to a distal portion of an elongated shaft formed of heat conducting material, inserting the proximal portion of the shaft having the filler material thereon into the root canal, heating the shaft to decrease the surface tension of the filler material and removing the shaft leaving the filler material in the root canal. An obturator system for practicing the method of filling an endodontically prepared root canal employs an elongated heat conductible shaft having proximal and distal portions with filler material on the distal portion, the distal portion of the shaft with the filler material thereon being insertable into a tooth root canal and a heat source serving to selectably heat the shaft allowing it to be removed while leaving the filler material in the root canal.

U.S. Pat. No. 9,023,917 describes a carrier composition for filling a tooth root canal, comprising about 1% to about 25% a thermoset material, the thermoset material being cis 1-4 polyisoprene; a curing agent; about 25% to about 45% a radiopacifier, the radiopacifier having an average particle size of about 1.25 microns to about 2 microns; about 0.05% to about 50% a filler; and about 0.5 to about 15% an elastomer; wherein cis 1-4 polyisoprene to the elastomer is present in a ratio ranging from about 10:1 to about 1:1.

U.S. Pat. No. 9,192,545 describes a root canal filling material, comprising: a matrix comprising a heat flowable material, wherein the heat flowable material is gutta-percha; and heat conductive particles of a size 1 micron or less are dispersed in the heat flowable material of the matrix, wherein the particles are non-metallic.

U.S Pat. No. 10,478,383 describes a root canal filling composition, comprising: a plurality of gutta percha polymers having different mooney index values; an antioxidant of particles having a particle size of 1000 nm or less; and a filler of particles having a particle size of 1000 nm or less, wherein the composition can substantially maintain its physical and chemical characteristics and shelf life after sterilization by irradiation.

A problem with root canal obturation not addressed adequately by the prior art is how to fill the root canal anatomy more effectively. There is a continuing need to provide an obturator having filler material disposed thereon that allows the root canal to fill more apically and laterally.

### SUMMARY OF THE DISCLOSURE

It is an object of the present disclosure to provide an obturator having a configuration that allows filling material to flow more apically and laterally, so it can fill in the canal anatomy properly. The obturator is configured to have a multiple viscosity coating. The filling material arranged on the obturator have improved flow properties so that the filler material may flow more apically and laterally.

The invention provides an obturator for filling an endodontically prepared root canal, comprising: an elongated carrier having a distal end and proximal end; a working portion extending from the distal end towards the proximal end; the working portion having an apical portion, a coronal portion and an intermediate point; a coating of filler material surrounding the working portion of the carrier; wherein the coating of filler material is arranged into at least three segments about the working portion; wherein the at least three segments includes a first segment of first filler material characterized by a first viscosity, a second segment of second filler material characterized by a second viscosity and a third segment of third filler material characterized by a third viscosity.

In a second aspect of the present disclosure there is provided a non-claimed method of manufacturing an obturator for filling an endodontically prepared root canal, the obturator comprising an elongated carrier having a distal end, a proximal end, and a working portion with a combination of filler material having multiple viscosities coated on the working portion. The method comprises:(a) providing a mold having a plurality of cavities in the mold; (b) placing the at least two filler materials into each of the plurality of cavities of the mold; (c) baking the mold at a temperature of between 98.9°C and 154.4°C for from about 4 h to about 24 h to form the mold having a heated filler material comprising the at least two filler materials, whereby the at least two filler materials have different viscosities upon heating; (d) inserting the working portion of the carrier into the mold having the heated filler material; (e) placing a lid on top of the mold to keep the carrier at a correct depth; (g) allowing the heated filler material to cool at about room temperature, solidify and thereby forming a coating comprising the combination filler material having multiple viscosities on the working portion of the carrier, thereby forming obturator; and (h) removing the obturator from the mold.

In yet another aspect of the disclosure, there is provided a non-claimed method of manufacturing an obturator comprising: (a) forming an initial coating of a first filler material over the working portion of the carrier; (b) filling a mold having a plurality of cavities in the mold with a second filler material; (c) baking the mold to form the mold having a heated second filler material; (d) inserting the initial coated working portion carrier into each cavity of the mold having the heated second filler material; (e) placing a lid on top of the second mold to maintain the elongated carrier at a correct depth; (f) cooling the second filler material to form a subsequent coating of the second filler material on a portion of the initial coated working portion carrier, thereby forming the obturator and removing the obturator from the mold.

Other aspects will be set forth in the description which follows, and in part will be apparent from the description or may be learnt by the practice of the disclosure.

### BRIEF DESCRIPTION OF DRAWINGS

**FIG. 1A** depicts a side view of the silicone mold **21.**
**FIG. 1B** depicts a side view of the silicone mold **22.**
**FIG. 2A** depicts a top view of the silicone mold **22.**
**FIG. 2B** depicts a silicone mold with a lid.
**FIG. 3A** demonstrates an obturator (**40**) of one embodiment with a multiple viscosity filling material coating.
**FIG. 3B** demonstrates an obturator (**41**) of another embodiment with a multiple viscosity filling material coating.
**FIG. 3C** depicts a three- segment obturator (**42**).
**FIG. 4A** demonstrates an obturator (**43**) of an embodiment with a multiple viscosity filling material coating.
**FIG. 4B** demonstrates an obturator (**44**) of another embodiment with a multiple viscosity filling material coating

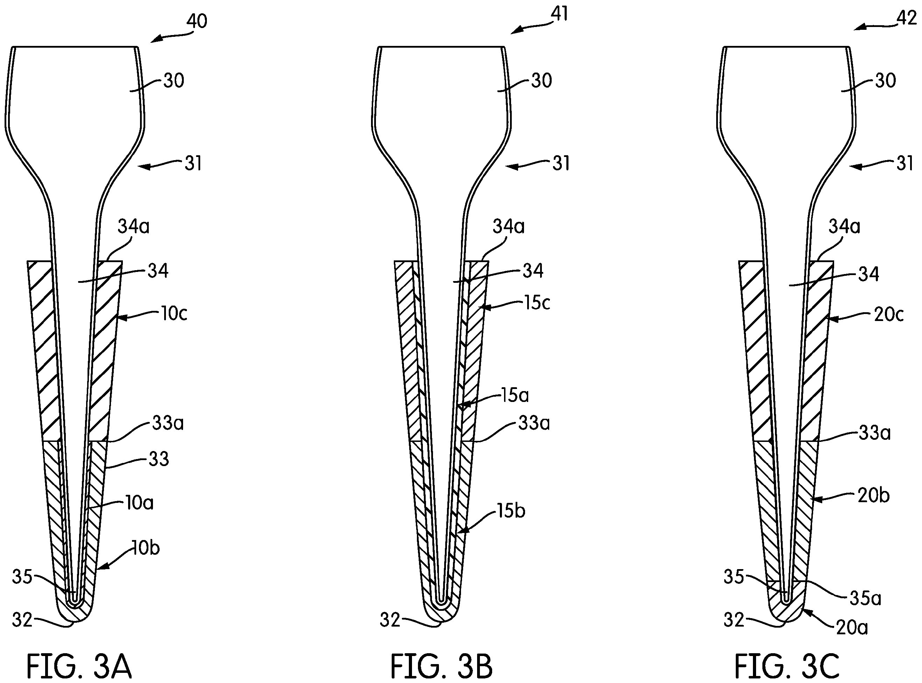

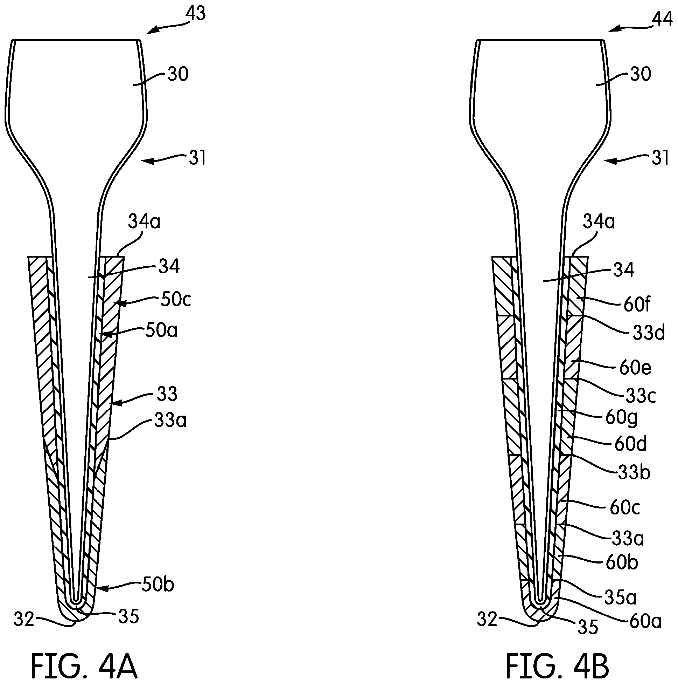

The obturators demonstrated in the figures 3a, 3b and 4a do not fall within the scope of the claimed invention.

### DETAILED DESCRIPTION OF THE DISCLOSURE

The above-mentioned aspects, as well as other aspects, features, and advantages of the present disclosure are described below in connection with various embodiments, with reference made to the accompanying figures.

The endodontic instrument according the present disclosure is designed having a configuration of filler material disposed on the device that allows more filling material to flow apically, and laterally so it can fill in the canal anatomy properly. The endodontic instrument is an obturator for use in filling an endodontically prepared root canal.

The endodontic instrument includes an obturator for filling an endodontically prepared root canal, the obturator comprising: an elongated carrier having a distal end and proximal end; a working portion extending from the distal end towards the proximal end; the working portion having an apical portion, coronal portion and an intermediate point; a coating of filler material surrounding the working portion of the carrier; wherein the coating of the filler material is arranged into at least three segments about the working portion; wherein the at least three segments include a first segment of first filler material characterized by a first viscosity, a second segment of second filler material characterized by a second viscosity and a third segment of third filler material characterized by a third viscosity.

The endodontic instrument according to the present disclosure includes multiple viscosity filler material coatings. According to the invention, the first viscosity is different than second viscosity and the first viscosity is same as third viscosity.

The carrier may be made of a cross-linkable (e.g., thermoset) material (e.g., first rubber and/or plastic). Examples of cross-linkable materials include, but are not limited to, epoxides, phenolics (e.g., bakelite), polyimides, formaldehyde resins (e.g., urea formaldehyde or melamine formaldehyde), polyester thermosets, unsaturated polyesters, polyurethane, bis-maleimides (BMI), silicone, the like, or any combinations thereof .The cross-linkable material may be present in an amount of from about 1% to about 70%, such as from about 5% to about 45% (e.g., about 10% to about 25%) by wt of the carrier composition. Examples of a carrier composition are disclosed in U.S Pat. No. 9,675 528.

A coating of filler material surrounds the working portion of the carrier, and the coating is a combination of filler materials having multiple viscosities.

The filler material may be any known filler material including, but not limited to, gutta-percha, thermoplastic, thermoset, chemoplastic, or other resin or polymeric material.

Examples of polymeric filler materials include, but are not limited to, polyacrylates/methacrylates, polyurethanes, polypropylenes, polyethylenes, polyamides, fluoropolymers, polyesters, polyphosphazenes, polyanhydrides, polysulfides, polyethers, epoxides, polycarbonates, polystyrenes, polyisoprenes, polybutadienes, polyphenylene oxides, silicone rubbers, polylactides, polyglycolides, polycaprolactones, polyamides, polyesteramides, polyorthoesters, polydioxanones, polyacetals, polyketals, polyorthocarbonates, polyhydroxybutyrates, polyhydroxyvalerates, polyalkylene oxalates, polyethylene oxides, polyalkylene succinates, poly(malic acid) polymers, polymaleic anhydrides, poly(methylvinyl) ethers, poly(amino acids), chitin, chitosan, polyamides, polyesters, polyolefins, polyimides, polyarylates, polyurethanes, vinyl esters or epoxy-based materials, styrenes, styrene acrylonitriles, ABS polymers, polysulfones, polyacetals, polycarbonates, polyphenylene sulfides, polyarylsulfides, acrylonitrile-butadiene-styrene copolymers, polyurethane dimethacrylates (hereinafter abbreviated to "UDMA", triethylene glycol dimethacrylate (hereinafter abbreviated "TEGDMA"), polyethylene glycol dimethacrylate (hereinafter abbreviated "PEGDMA"), urethane dimethacrylate (hereinafter abbreviated "UDMA"), hexane diol dimethacrylate (hereinafter abbreviated "1,6 HDDMA") and polycarbonate dimethacrylate (hereinafter abbreviated "PCDMA") and copolymers, terpolymers, or combinations or mixtures thereof.

Examples of polyacrylates include, but are not limited to, polymethyl methacrylate, polyhydroxy ethyl methacrylate, or hydroxy ethyl methacrylate (HEMA). Examples of fluoropolymers include, but are not limited to, Teflon^{®} PTFE or Teflon^{®} PFA.

Examples of polyesters include, but are not limited to, polylactic acid, glycolide, polycaprolactone or a co-polymer thereof. An example of silicone rubber is polysiloxane.

The filler material according to the present disclosure are characterized by different viscosity upon heating.

The filler materials may be of the same formulation however made by different heat treatments to have different viscosities, For Example, baking the gutta-percha between 98.9°C and 154.4°C for between 4 hours and 24 hours to achieve the low viscosity gutta-percha, as disclosed in U.S. Pat. No. 5,372,759; or baking the gutta-percha between 98.9°F and 154.4°C for a period of time between 15 minutes and 4 hours to achieve the high viscosity gutta-percha.

The filler material may be of different formulations with different initial viscosities. For example the formulation for the low flow or high viscosity may be a matrix comprising a heat flowable material, wherein the heat flowable material is gutta-percha; and heat conductive particles of a size 1 micron or less dispersed in the heat flowable material of the matrix, wherein the particles are non-metallic, as disclosed in U.S. Pat. No. 9,192,545.

The filler material for the low flow or high viscosity may include additional processing aid additives such as antioxidants, waxes, and/or saturated fatty acids.

For the obturators with three segments of filler material, the high viscosity filler material at the distal end of the obturator can provide an "apical plug" effect, which will help with stopping excess filler material from extruding through the apex of a root. In one embodiment of the obturator, filler materials are characterized by different viscosities upon heating. For example, a first filler material characterized by a first viscosity, a second filler material characterized by a second viscosity, a third filler material characterized by a third viscosity, and so on.

In one embodiment of the obturator, the first filler material is characterized by a first viscosity having a target melt flow between 0 and 20g/10 min; alternatively, between 0.5 and 15 g/10 min; and alternatively, between 5 and 10g/10 min.

In another embodiment of the obturator, the second filler material is characterized by a second viscosity having a target melt flow of above 50g/10 min; alternatively, above 100g/10 min or between 50 and 200g/10min or between 55 and 80g/10 min.

According to yet another embodiment of the obturator, the third filler material is characterized by a third viscosity having a target melt flow of between 0 and 20g/10 min; alternatively, between 0.5 and 15 g/10 min; alternatively, between 5 and 10 g/10 min.

The flow rates above are tested with a mass of 2.26 kg, a temperature of 108 °C and an orifice diameter of 0.0823 inches.

In one aspect of the obturator, the coating of filler material is arranged into at least three segments about the working portion. The at least three segments includes a first segment of first filler material characterized by first viscosity, a second segment of second filler material characterized by second viscosity and a third segment of third filler material characterized by third viscosity.

Each segment of the obturator may be arranged in a layer, for example, one or two layers of filler material (initial and subsequent) having different viscosities. There may be a variation that includes viscosity gradient in the filler material from the distal end to the coronal end of the filler material, or alternatively there is a viscosity gradient from the outside (subsequent layer) to the inside (initial layer) of the filler material.

An obturator with different filler material configurations coated about the working portion is illustrated in **FIGS. 3A, 3B, 3C****,** **4A and 4B****.** An obturator ((**40**: as shown in **FIG.3A****),** (**41**: as shown in **FIG. 3B**), (**42**: as shown in **FIG.3C****), (43:** as shown in **FIG.4A****), (44:** as shown in **FIG.4B****)),** is depicted herein. The obturator comprises: an elongated carrier (**31**) having a distal end (**32**) and a proximal end (**30**); a working portion (**33**) extending from the distal end towards the proximal end. The distal end may have a diameter ranging from 0.2 mm to 2 mm. The working portion includes an apical portion (**35**), a coronal portion (**34**) and an intermediate point (**33a**). The coronal portion (**34**) ends at a coronal end (**34a**), while the apical portion (**35**) ends at the distal end (**32**) or tip end. The working portion (**33**) may be tapered or non-tapered. The taper may be a constant taper or a variable taper along the length of the working portion (**33**). The taper range may be from 0 % to 10%. The length of the working portion is a length ranging from 14 mm to 20 mm.

In one embodiment of the obturator (**42,** **FIG.3C**), the first segment (**20a**) extends from the distal end (**32**) of the carrier to a first point (**35a**) of the apical portion (**35**); the second segment (**20b**) extends from the first point (**35a**) of the apical portion to the intermediate point **(33a**) of the working portion and the third segment (**20c**) extends from the intermediate point (**33a**) towards the coronal end (**34a**) of the working portion. The length of the first segment is between 0.5 mm to 2 mm; alternatively, between 1 mm to 1.5 mm. The length of the second segment is between 5 mm to 10 mm, alternatively between 7 mm to 9 mm; and the length of the third segment is between 5 mm to 10 mm; alternatively, between 7 mm to 9 mm. The first segment (**20a**) includes a first filler material characterized by a first viscosity, the second segment (**20b**) includes a second filler material characterized by a second viscosity, and the third segment (**20c**) includes a third filler material characterized by a third viscosity.

In a more specific embodiment of the obturator (**42,** **FIG.3C**), the first viscosity is different than the second viscosity and the first viscosity is the same as the third viscosity. The first segment (**20a**), the second segment(**20b**) and the third segment (**20c**) form a coating that surrounds the surface of the working portion from the coronal end to the distal end.

In another embodiment of the obturator (**40,** **FIG.3A**), the first segment (**10a**) extends from the distal end (**32**) to the intermediate point (**33a**), the second segment (**10b**) surrounds the first segment (**10a**), the second segment extending from the distal end (**32**) to the intermediate point (**33a**), and the third segment (**10c**) extends from the intermediate point (**33a**) towards the coronal portion end (**34a**) of the working portion (**33**). The length of each of the first segment and the second segment is between 5 mm to 10 mm from the distal end; alternatively, between 7 mm to 9 mm. The length of the third segment is between 5 mm to 10 mm from the intermediate point to the coronal portion end. The first segment (**10a**) includes a first filler material characterized by a first viscosity, the second segment (**10b**) includes a second filler material characterized by a second viscosity, and the third segment (**10c**) includes a third filler material characterized by a third viscosity.

In a more specific embodiment of the obturator (**40,** **FIG.3A**), the first viscosity is different than the second viscosity and the first viscosity is the same as the third viscosity. Alternatively, when the first viscosity is same as the third viscosity, the first segment (**10a**) and third segment (10c) form an initial coating that surrounds the surface of the working portion from the coronal end to the distal end, while the second segment (**10b**) coats the first segment (**10a**), extending from the distal end (**32**) to the intermediate point (**33a**). The total length of the first segment and the third segment is from about 16 mm to about 19 mm as measured from the distal end to the coronal end.

In yet another embodiment of obturator (**41,** **FIG.3B**), the second segment (**15a**) extends up to from the distal end (**32**) of the carrier towards coronal end (**34a**), the first segment (**15c**) surround a portion of second segment(**15a**), extending from an intermediate point (**33a**) towards the coronal portion end (**34a**) of the working portion and the third segment (**15b**) surround a portion of second segment (**15a**), extending from the distal end (**32**) up to an intermediate point (**33a**). The length of the second segment (**15a**) is about 16 mm from the distal end (**32**) to the coronal end (**34a**); alternatively, about 19 mm. The length of first segment (**15c**) is between 5 mm to 10 mm as measured from the intermediate point (**33a**) towards the coronal portion end (**34a**) of the working portion (**33**); alternatively, between 7 mm to 8 mm. The length of the third segment (**15b**) is between 5 mm to 10 mm as measured from the distal end (**32**) to an intermediate point (**33a**); alternatively, between 7 mm to 9 mm. The first segment (**15c**) includes a first filler material characterized by a first viscosity, the second segment (**15a**) includes a second filler material characterized by a second viscosity, and the third segment (**15b**) includes a third filler material characterized by a third viscosity.

In a more specific embodiment of the obturator (**41,** **FIG.3B**), the first viscosity is different than the second viscosity and the second viscosity is the same as the third viscosity. Alternatively, when the second viscosity is the same as the third viscosity, the portion of the second segment (**15a**) extending from the distal end (**32**) up to an intermediate point (**33a**) and the third segment (**15b**) overlap to form a coating that surrounds the surface of the working portion, while the first segment (**15c**) coats a portion of second segment(**15a**), extending from an intermediate point (**33a**) towards the coronal portion end (**34a**).

In a further embodiment of the obturator (**43,** **FIG. 4A**), a transition between the outer segments (**50b**) and (**50c**) is depicted. The first segment (**50a**) extends down from the coronal end (**34a**) of the carrier to the distal end (**32**), the second segment (**50b**) surrounds a portion of the first segment (**10a)**, extending from the distal end up to an intermediate point (**33a**), and the third segment (**50c**) extending from intermediate point (**33a**) towards the coronal portion end (**34a**) of the working portion (**33)**. The first segment (**50a**) includes a first filler material characterized by a first viscosity, the second segment (**50b**) includes a second filler material characterized by a second viscosity, and the third segment (**50c**) includes a third filler material characterized by a third viscosity. In a more specific embodiment, the first viscosity is different than the second viscosity and the first viscosity is the same as the third viscosity.

In yet a further embodiment of the obturator (**44,** **FIG. 4B**), a multiple viscosity filling material coating having several segments is shown. The first segment (**60g**) extends down from the coronal end (**34a**) of the carrier to the distal end (**32**). The second segment (**60a**) extends from the distal end (**32**) of the carrier to a first point (**35a**) of the apical portion (**35**); the third segment (**60b**) extends from the first point (**35a**) of the apical portion to the intermediate point (**33a**) of the working portion; the fourth segment (**60c**) extends from the intermediate point (**33a**) to the intermediate point (**33b**) of the working portion; the fifth segment (**60d**) extends from the intermediate point (**33b**) to the intermediate point (**33c**) of the working portion; the sixth segment (60e) extends from the intermediate point (**33c**) to the intermediate point (**33d**) of the working portion and the seventh segment **(60f**) extends from the intermediate point(**33d**) towards the coronal end (**34a**) of the working portion. The length of the first segment (**60g**) is about 16 mm from the 16 mm to about 19 mm as measured from the distal end to the coronal end. As one of ordinary skill in the art will understand, the number of segments over the first segment can be varied according to manufacturing process and can be as few as two overlaying segments, and as many as ten overlaying segments. The length of the second segment (**60**a) is between 0.5 mm to 2 mm; alternatively, between 1 mm to 1.5 mm. The length of the each of third segment (**60b**), fourth segment (**60c**), fifth segment (**60d**), sixth segment(**60e**) and the seventh segment (**60f**) is between 2 mm to 5 mm. The multiple segments of the obturator can be formed using different filler material characterized by different viscosities.

A non-claimed method of manufacturing the obturators are herein disclosed. The method for manufacture of obturator **42** includes:
a) providing a mold having a plurality of cavities in the mold;
(b) placing the at least two filler materials into each of the plurality of cavities of the mold;
(c) baking the mold at a temperature of between 98.9°C and 154.4°C for from about 4 h to about 24 h to form the mold having a heated filler material comprising the at least two filler materials, whereby the at least two filler materials have different viscosities upon heating;
(d) inserting the working portion of the carrier into the mold having the heated filler material;
(e) placing a lid on top of the mold to keep the carrier at a correct depth;
(g) allowing the heated filler material to cool at about room temperature, solidify and thereby forming a coating comprising the combination filler material having multiple viscosities on the working portion of the carrier, thereby forming obturator; and
(h) removing the obturator from the mold.

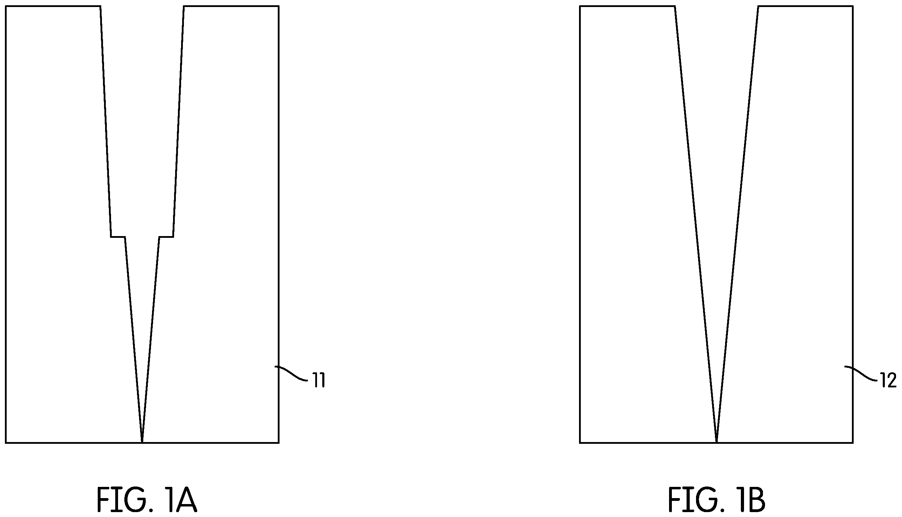

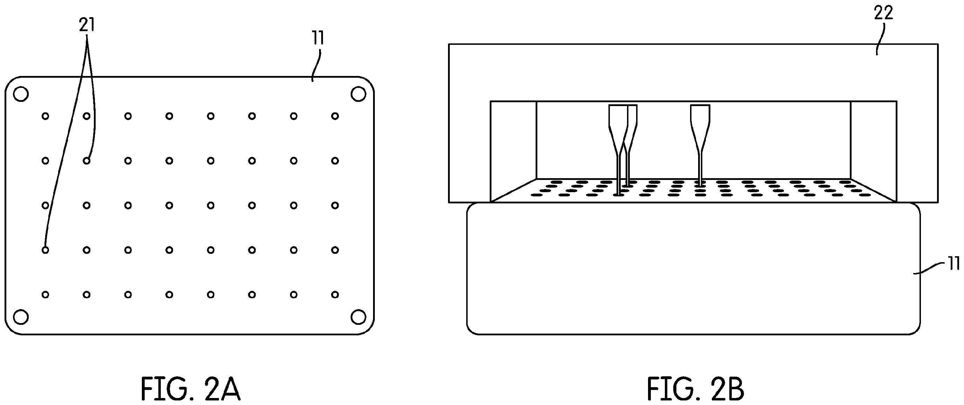

The molds (**11, 12**) to be used in the manufacture of the obturators according to the present disclosure are illustrated in **FIG. 1A** and **FIG.1B****.** The mold is preferably a silicone mold but can be made out of any suitable material that allows the formation and removal of the obturator from the mold. **FIG. 2A** depicts top view of the silicone mold **11** with a plurality of cavities (**21**) in the mold. **FIG. 2B** depicts silicone mold with a lid (**22)**.

The at least two segments may include a first segment of a first filler material, a second segment of a second filler material, and a third segment of a third filler material.

In an embodiment of the method of manufacture of the obturator (**42**), the at least two filler materials are placed into each cavity the mold in a following sequence: a first segment (**20a**) of first filler material is placed into each cavity of the mold; subsequently a second segment (**20b**) of the second filler material is placed over the first segment of the first filler material into the same cavity of the mold, and finally then a third segment (20c) of the third filler material is placed over the second segment of the second filler material into the same cavity of the mold.

The length of the first segment is between 0.5 mm to 2 mm; alternatively, between 1.0 mm to 1.5 mm. The length of the second segment is between 5 mm to 10 mm, alternatively between 7 mm to 9 mm; and the length of the third segment is between 5 mm to 10 mm; alternatively, between 7 mm to 9 mm.

In one embodiment of the method, the at least two filler materials are provided in the form of an injected gutta-percha point. US. Pat. Appl. No 20140272802 and U.S Patent No. 10484633 disclose gutta-percha points made by injection molding; each reference is incorporated in its entirety herein by reference.

The gutta-percha point having the at least two filler materials is prepared by gated-injection mold process. For Example, a first filler material would be injected first while the other segments are gated off, then the second filler material would be injected. It is conceivable that either first filler material or second filler material could be injected first. The gates would be there for the first injection cycle, but then be removed for the second cycle so that it forms one filler material point with multiple segments. US. Pat.Appl. No.20200094456 discloses gated injection molding of an obturator.

The mold (12) containing at least two filler materials is baked in an oven to form the mold having heated filler material comprising the at least two filler materials, whereby the at least two filler materials have different viscosities upon heating. The mold is baked between 98.9°C and 154.4°C for about 4 h to about 24 h; Alternatively, the mold is baked between 110°C and 143.3°C for about 6 h to about 20 h; Alternatively, the mold is baked between 121.1°C and 137.7°C for about 8 h to about 16 h.

The at least two filler materials have different viscosities upon heating is intended to mean that after heating, the at least two filler materials includes a first segment of heated first filler material characterized by first viscosity, a second segment of heated second filler material characterized by second viscosity and a third segment of heated third filler material characterized by third viscosity. In a more specific embodiment, the first viscosity is different than the second viscosity and the first viscosity is the same as the third viscosity. For example, the heated first filler material is characterized by a first viscosity having a target melt flow between 0 and 20g/10 min; alternatively, between 0.5 and 15 g/10 min; and alternatively, between 5 and 10g/10 min. The heated second filler material is characterized by a second viscosity having a target melt flow of above 50g/10 min; alternatively, above 100g/10 min or between 50 and 200g/10min or between 55 and 80g/10 min and the heated third filler material is characterized by a third viscosity having a target melt flow of between 0 and 20g/10 min; alternatively, between 0.5 and 15 g/10 min; alternatively, between 5 and 10 g/10 min. In an embodiment, the first filler material and the third filler material may have same composition.

After the filler materials is heated; the working portion (**33**) of the carrier is inserted into each cavity of the mold having the heated filler material. A lid (**22**) is placed on top of the mold (**12**) to keep the carrier at a correct depth. The heated filler material will then be allowed to cool at room temperature for at least 1 hour; alternatively, between 2 to 4 h. The heated filler material then solidifies and forms a coating comprising the combination filler material having multiple viscosities on the working portion of the carrier, thereby forming obturator (**42**). The carrier/obturator is then removed from the mold.

Another aspect of a non-claimed method of manufacturing the obturators is disclosed. The obturators **40,41, 43** and **44** may be prepared by the method disclosed herein. The method includes:
(a) forming an initial coating of a first filler material over a working portion (33) of the carrier;
(b) filling a mold (**12**) having a plurality of cavities with a second filler material;
(c) baking the mold to form the mold having the heated second filler material;
(d) inserting the initial coated working portion carrier into each of the plurality of cavities of the mold having the heated second filler material;
(e) placing a lid (**22**) on top of the mold to maintain the elongated carrier at a correct depth;
(f) cooling the heated second filler material to form a subsequent coating of the second filler material on a portion of the initial coated working portion carrier, thereby forming the obturator and removing the obturator from the mold.

According to the non-claimed method of forming an initial coating of a first filler material over the surface of working portion (**33**) of the carrier includes (i) inserting the working portion of the carrier into a container having a heated first filler material;(ii) optionally placing a lid on top of the container to keep carrier at a correct initial depth; (iii) cooling the filler material to form an initial coating of a first filler material over a working portion of the carrier.

The container is selected from a crucible (**1**) or a initial mold (**11**) having a plurality of cavities (21). The container having a heated first filler material is obtained by baking the container filled with first filler material between 98.9°C and 154.4°C for about 15 min to about 4 h; Alternatively, the initial mold is baked between 121.1°C and 137.7°C for about 2 h to about 4 h. The mold having second filler material is heated between 98.9°C and 154.4°C for about 4 h to about 24 h; Alternatively, the mold is baked between 121.1°C and 137.7°C for about 8 h to about 16 h.

When the lid is placed on the top of the container to keep the carrier at a correct initial depth, the depth is about 16 mm from the distal end of the carrier.

The heated first filler material is characterized by a first viscosity or a second viscosity. The heated first filler material is characterized by first viscosity having a target melt flow of between 0 to 20g/10 min; alternatively, between 0.5 and 15 g/10 min; and alternatively, between 5 and 10g/10 min. The heated first filler material may be characterized by a second viscosity having a target melt flow of greater than 50g/10 min; alternatively, above 100g/10 min or between 50 and 200g/10min or between 55 and 80g/10 min.

In the non-claimed method of manufacture of obturator, when the heated first filler material characterized by a first viscosity is used to create an initial coating from the coronal end to the distal end working portion carrier (for example, first segment(**10a**) and third segment(**10c**) of obturator (**40,** **FIG. 3A**), wherein first viscosity is same as the third viscosity), then the mold (**12**) is filled with second filler material up to between 5-10 mm from the distal end (**10b**). The heated second filler material in step (c) of the method, is characterized by a second viscosity having a target melt flow of greater than 50g/10 min; alternatively, above 100g/10 min or between 50 and 200g/10min or between 55 and 80g/10 min. After performing further subsequent step (c) to (f), the obturator **40** is obtained.

In yet another example of the non-claimed method, when the heated first filler material is characterized with a second viscosity is used to create an initial coating from the distal end to the coronal end of the carrier (for example, second segment (**15a**) of the obturator (**41,** **FIG.3B**)}; the silicone mold (**12**) is filled with a second filler material between 5-10 mm from the distal end (segment **15b**) and subsequently filled with a third filler material (segment **15c**) over the top of the second filler material. The heated second filler material in step (c) of the method, is characterized by a second viscosity having a target melt flow of greater than 50g/10 min; alternatively, above 100g/10 min or between 50 and 200g/10min or between 55 and 80g/10 min. The heated third filler material is characterized by a third viscosity having a target melt flow of between 0 to 20g/10 min; alternatively, between 0.5 and 15 g/10 min; and alternatively, between 5 and 10g/10 min. After performing further subsequent step (c) to (f), the obturator **41** is obtained.

The initial coating thickness is from 10 µm to 500 µm over the length of the working portion.

The invention is defined in the claims.

In addition, all numerical values identified in the detailed description shall be interpreted as though the precise and approximate values are both expressly identified.

## Claims

1. An obturator for filling an endodontically prepared root canals, comprising:
an elongated carrier (31) having a distal end (32) and a proximal end (30);
a working portion (33) extending from the distal end towards the proximal end; the working portion having an apical portion (35), a coronal portion end and an intermediate point (33a);
a coating of filler material surrounding the working portion of the elongated carrier;
wherein the coating of filler material being arranged into at least three segments about the working portion;
wherein the at least three segments include a first segment (20a) of first filler material
**characterized by** a first viscosity, a second segment (20b) of second filler material **characterized by**
a second viscosity and a third segment (20c) of third filler material **characterized by** a third viscosity.

2. The obturator according to claim 1, wherein the first filler material **characterized by** the first viscosity has a target melt flow of between 0 and 20g/10 min.

3. The obturator according to claim 1, wherein the second filler material **characterized by** the second viscosity has a target melt flow of between 50 and 200g/10min.

4. The obturator according to claim 1, wherein the third filler material **characterized by** the third viscosity has a target melt flow of between 0 and 20g/10 min.

5. The obturator according to claim 1, wherein the first segment extends from the distal end of the carrier to a first point of the apical portion; the second segment extends from the first point of the apical portion to the intermediate point of the working portion and the third segment extends from the intermediate point towards the coronal portion end of the working portion.

6. The obturator according to claim 5, wherein a length of the first segment is between 0.5 mm to 2 mm, a length of the second segment is between 5 mm to 10 mm, and a length of the third segment is between 5 mm to 10 mm.

7. The obturator according to claim 1, wherein the first segment extends from the distal end to the intermediate point, the second segment surrounds the first segment, the second segment extending from the distal end to the intermediate point, and the third segment extends from the intermediate point towards the coronal portion end of the working portion.

8. The obturator according to claim 7, wherein a length of each of the first segment and the second segment is between 5 mm to 10 mm from the distal end, and a length of third segment is between 5 mm to 10 mm.

9. The obturator according to claim 1, wherein the second segment extends from the distal end of the carrier towards coronal portion end, the first segment surrounds a portion of the second segment, the first segment extending from the intermediate point towards the coronal portion end of the working portion, and the third segment surrounds a portion of the second segment, the third segment extending from the distal end up to the intermediate point.

10. The obturator according to claim 9, wherein a length of the second segment is about 16 mm from the distal end to the coronal portion end, a length of the first segment is between 5 mm to 10 mm, and a length of the third segment is between 5 mm to 10 mm.

## Patentansprüche

1. Obturator zum Füllen eines endodontisch präparierten Wurzelkanals, umfassend:
einen länglichen Träger (31) mit einem distalen Ende (32) und einem proximalen Ende (30);
einen Arbeitsabschnitt (33), der sich vom distalen Ende zum proximalen Ende erstreckt;
wobei der Arbeitsabschnitt einen apikalen Abschnitt (35), einen koronalen Abschnitt und einen Zwischenpunkt (33a) aufweist;
eine Beschichtung aus Füllmaterial, die den Arbeitsabschnitt des länglichen Trägers umgibt;
wobei die Beschichtung aus Füllmaterial in mindestens drei Segmenten um den Arbeitsabschnitt angeordnet ist; wobei die mindestens drei Segmente ein erstes Segment (20a) des ersten Füllmaterials, **gekennzeichnet durch** eine erste Viskosität, ein zweites Segment (20b) des zweiten Füllmaterials, **gekennzeichnet durch** eine zweite Viskosität und ein drittes Segment (20c) des dritten Füllmaterials, **gekennzeichnet durch** eine dritte Viskosität einschließen.

2. Obturator nach Anspruch 1, wobei das erste Füllmaterial, das durch die erste Viskosität gekennzeichnet ist, einen Zielschmelzfluss zwischen 0 und 20 g/10 min aufweist.

3. Obturator nach Anspruch 1, wobei das zweite Füllmaterial, das durch die zweite Viskosität gekennzeichnet ist, einen Zielschmelzfluss zwischen 50 und 200 g/10 min aufweist.

4. Obturator nach Anspruch 1, wobei das dritte Füllmaterial, das durch die dritte Viskosität gekennzeichnet ist, einen Zielschmelzfluss zwischen 0 und 20 g/10 min aufweist.

5. Obturator nach Anspruch 1, wobei sich das erste Segment von dem distalen Ende des Trägers zu einem ersten Punkt des apikalen Abschnitts erstreckt; das zweite Segment sich von dem ersten Punkt des apikalen Abschnitts zu dem Zwischenpunkt des Arbeitsabschnitts erstreckt und sich das dritte Segment von dem Zwischenpunkt in Richtung des koronalen Abschnitts des Arbeitsabschnitts erstreckt.

6. Obturator nach Anspruch 5, wobei eine Länge des ersten Segments zwischen 0,5 mm und 2 mm liegt, eine Länge des zweiten Segments zwischen 5 mm und 10 mm liegt und eine Länge des dritten Segments zwischen 5 mm und 10 mm liegt.

7. Obturator nach Anspruch 1, wobei sich das erste Segment von dem distalen Ende zu dem Zwischenpunkt erstreckt, das zweite Segment das erste Segment umgibt, wobei sich das zweite Segment von dem distalen Ende zu dem Zwischenpunkt erstreckt, und das dritte Segment sich von dem Zwischenpunkt in Richtung des koronalen Abschnitts des Arbeitsabschnitts erstreckt.

8. Obturator nach Anspruch 7, wobei eine Länge von jedem des ersten Segments und des zweiten Segments zwischen 5 mm und 10 mm von dem distalen Ende ist, und eine Länge des dritten Segments zwischen 5 mm und 10 mm liegt.

9. Obturator nach Anspruch 1, wobei sich das zweite Segment von dem distalen Ende des Trägers in Richtung des koronalen Abschnitts erstreckt, das erste Segment einen Abschnitt des zweiten Segments umgibt, wobei sich das erste Segment von dem Zwischenpunkt in Richtung des koronalen Abschnitts des Arbeitsabschnitts erstreckt, und das dritte Segment einen Abschnitt des zweiten Segments umgibt, wobei sich das dritte Segment vom distalen Ende bis zum Zwischenpunkt erstreckt.

10. Obturator nach Anspruch 9, wobei die Länge des zweiten Segments etwa 16 mm vom distalen Ende bis zum Ende des koronalen Teils beträgt, die Länge des ersten Segments zwischen 5 mm und 10 mm liegt und die Länge des dritten Segments zwischen 5 mm und 10 mm liegt.

## Revendications

1. Obturateur pour le remplissage d'un canal radiculaire préparé de manière endodontique, comprenant :
un support allongé (31) ayant une extrémité distale (32) et une extrémité proximale (30) ;
une partie de travail (33) s'étendant de l'extrémité distale vers l'extrémité proximale ;
la partie de travail ayant une partie apicale (35), une extrémité de partie coronale et un point intermédiaire (33a) ;
une couche de matériau de remplissage entourant la partie de travail du support allongé ;
dans lequel la couche de matériau de remplissage est agencée en au moins trois segments autour de la partie de travail ;
dans lequel les au moins trois segments incluent un premier segment (20a) de premier matériau de remplissage **caractérisé par** une première viscosité, un deuxième segment (20b) de deuxième matériau de remplissage **caractérisé par** une deuxième viscosité et un troisième segment (20c) de troisième matériau de remplissage **caractérisé par** une troisième viscosité.

2. Obturateur selon la revendication 1, dans lequel le premier matériau de remplissage **caractérisé par** la première viscosité a une fluidité cible à l'état fondu comprise entre 0 et 20 g/10 min.

3. Obturateur selon la revendication 1, dans lequel le deuxième matériau de remplissage **caractérisé par** la deuxième viscosité a une fluidité cible à l'état fondu comprise entre 50 et 200 g/10 min.

4. Obturateur selon la revendication 1, dans lequel le troisième matériau de remplissage **caractérisé par** la troisième viscosité a une fluidité cible à l'état fondu comprise entre 0 et 20 g/10 min.

5. Obturateur selon la revendication 1, dans lequel le premier segment s'étend de l'extrémité distale du support jusqu'à un premier point de la partie apicale ; le deuxième segment s'étend du premier point de la partie apicale jusqu'au point intermédiaire de la partie de travail et le troisième segment s'étend du point intermédiaire vers l'extrémité de partie coronale de la partie de travail.

6. Obturateur selon la revendication 5, dans lequel une longueur du premier segment est comprise entre 0,5 mm et 2 mm, une longueur du deuxième segment est comprise entre 5 mm et 10 mm et une longueur du troisième segment est comprise entre 5 mm et 10 mm.

7. Obturateur selon la revendication 1, dans lequel le premier segment s'étend de l'extrémité distale jusqu'au point intermédiaire, le deuxième segment entoure le premier segment, le deuxième segment s'étend de l'extrémité distale jusqu'au point intermédiaire, et le troisième segment s'étend du point intermédiaire vers l'extrémité de partie coronale de la partie de travail.

8. Obturateur selon la revendication 7, dans lequel une longueur de chacun du premier segment et du deuxième segment est comprise entre 5 mm et 10 mm à partir de l'extrémité distale, et une longueur du troisième segment est comprise entre 5 mm et 10 mm.

9. Obturateur selon la revendication 1, dans lequel le deuxième segment s'étend de l'extrémité distale du support vers l'extrémité de partie coronale, le premier segment entoure une partie du deuxième segment, le premier segment s'étendant du point intermédiaire vers l'extrémité de partie coronale de la partie de travail, et le troisième segment entoure une partie du deuxième segment, le troisième segment s'étendant de l'extrémité distale jusqu'au point intermédiaire.

10. Obturateur selon la revendication 9, dans lequel une longueur du deuxième segment est d'environ 16 mm de l'extrémité distale jusqu'à l'extrémité de partie coronale, une longueur du premier segment est comprise entre 5 mm et 10 mm, et une longueur du troisième segment est comprise entre 5 mm et 10 mm.
